# EUROPEAN PATENT SPECIFICATION

(11) **EP 3 516 919 B1**
(45) Date of publication and mention of the grant of the patent: **27.07.2022**
(21) Application number: 17851684.5
(22) Date of filing: 18.09.2017
(51) Int. Cl.: H04W 76/00, H04W 52/02, G08B 13/196, G08B 29/00, H04W 84/12

(54) **HUBLESS, BATTERY-POWERED VIDEO COMMUNICATION DEVICE**
HUBLOSE BATTERIEBETRIEBENE VIDEOKOMMUNIKATIONSVORRICHTUNG
DISPOSITIF DE COMMUNICATION VIDÉO SANS CONCENTRATEUR ALIMENTÉ PAR BATTERIE

(30) Priority: 19.09.2016 US 201662396301 P
(43) Date of publication of application: 31.07.2019
(73) Proprietor: Canary Connect, Inc., New York, NY 10017 (US)
(72) Inventor: KATSMAN, Andrey, New York, NY 10017 (US); RILL, Christopher, I., New York, NY 10017 (US); LAKSHMINARAYANAN, Karthik, New York, NY 10017 (US)
(74) Representative: Mewburn Ellis LLP
(86) International application number: PCT/US2017/051957
(87) International publication number: WO 2018/053382

(56) References cited:
- EP-A2- 2 779 134
- EP-A2- 3 023 950
- US-A1- 2005 099 519
- US-A1- 2007 081 486
- US-A1- 2007 290 830
- US-A1- 2009 189 981
- US-A1- 2009 189 981

## Description

### CROSS-REFERENCE TO RELATED APPLICATIONS

This application claims the benefit of priority to U.S. Provisional Patent Application No. 62/396,301, entitled, HUBLESS, BATTERY-POWERED VIDEO COMMUNICATION DEVICE, which was filed on September 19, 2016.

### FIELD OF THE INVENTION

This disclosure relates to a system that includes a device that is typically battery-powered and able to communicate data (e.g., video, etc.), without a hub, to a remote destination, over a wireless connection, very quickly and substantially in real-time, in response to a trigger.

### BACKGROUND

Devices of various kinds are becoming ubiquitous in modern society. Many of these devices (including, for example, security monitoring devices) are being configured to wirelessly communicate with smart phones and the like. These devices and systems may use a variety of different protocols. It is generally desirable that the devices and systems be able to perform their intended roles in an efficient, convenient, reliable and secure manner.

US 2009/189981 A discloses video delivery systems using wireless cameras.

### SUMMARY OF THE INVENTION

In one aspect, a system is disclosed that includes a first device (e.g., a security monitoring device) having a processor and a Wi-Fi module, and a remote processing system coupled to the first device via a wireless connection across a network. The first device is configured to switch, during operation, between: a first operating mode in which the processor performs packet processing (including, e.g., sequence numbering for communications over the wireless connection) on behalf of the first device, and a second operating mode in which the processor is in a reduced power state and the Wi-Fi module, and not the processor, performs packet processing (including, e.g., sequence numbering for communications over the wireless connection) for the wireless connection on behalf of the first device, wherein the system is configured such that: when the first device (102) switches from the first operating mode (308) to the second operating mode (302), a then-current sequence number associated with packets transmitted over the wireless connection is transferred (312) from a computer-based memory in the first device to the Wi-Fi module, or when the first device (102) switches from the second operating mode (302) to the first operating mode (308), a then-current sequence number associated with packets transmitted over the wireless connection is transferred (306) from the Wi-Fi module to an operating system for the processor.

In some implementations, one or more of the following advantages are present.

For example, a security system can be provided that includes a hubless, battery-powered security device that has a long battery life, and is able to provide access to collected data (e.g., images or video from a monitored premises or other sensor readings) very quickly when appropriately triggered. Eliminating the need for hub (e.g., one that might send keep-alive packets to maintain a wireless connection, especially when the system is being operated in a reduced power manner) simplifies system setup considerably. The system is more environmentally-friendly than systems that utilize a hub. The system may be less expensive for a consumer than a hub-based system (e.g., there is no need to buy a hub in addition to a monitoring device). The system may be more flexible in that monitoring device(s) may be located anywhere on the premises and need not be located only within transmission range of a hub. This can be particularly important for people who have large homes. The system may allow the potential use of LTE hotspots in conjunction with a monitoring device, especially helpful with outdoor locations. The system may provide the ability for a remote user or system to signal to a security monitoring system to start uploading video at any time.

Other features and advantages will be apparent from the description and drawings, and from the claims.

### BRIEF DESCRIPTION OF THE DRAWINGS

FIG. 1 is a schematic representation of an exemplary hubless security monitoring system.
FIG. 2 is a flowchart showing an exemplary process for controlling wireless communications over a wireless connection between the security monitoring device and the remote security processing system in FIG. 1.
FIG. 3 is a partial schematic representation of one implementation of the security monitoring device in FIG. 1.
FIGS. 4A and 4B are perspective views (front and back, respectively) showing an exemplary implementation of the security monitoring device in FIG. 1.

Like reference characters refer to like elements.

### DETAILED DESCRIPTION

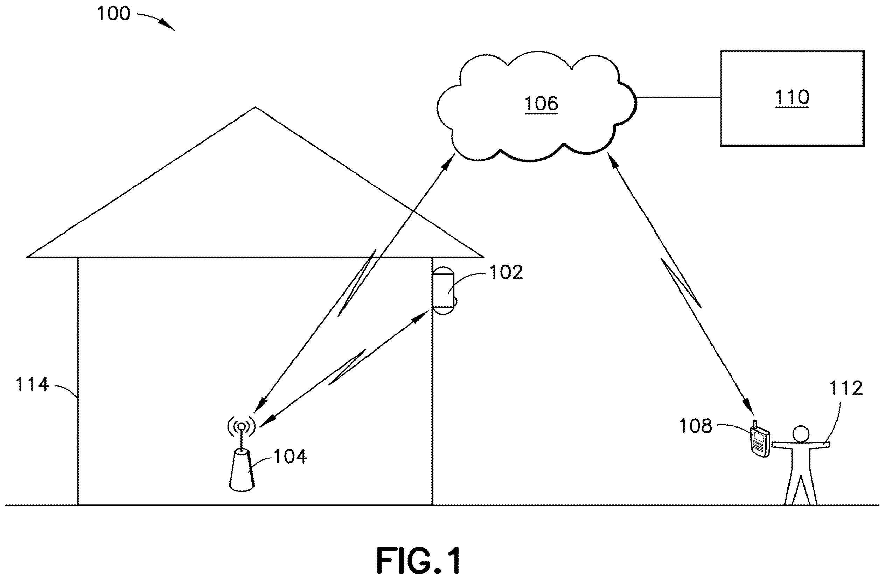

FIG. 1 is a schematic representation of an exemplary hubless, security monitoring system 100.

The illustrated security monitoring system 100 includes a security monitoring device 102, a wireless access point 104 (e.g., a Wi-Fi router), a network 106 (e.g., the Internet), a user's mobile device 108 (e.g., a smartphone), and a remote security processing system 110. In the illustrated system 100, the security monitoring device 102, the remote security processing system 110 and the user's mobile device 108 are able to communicate with each other over the network 106. In this regard, the security monitoring device 102 is able to access the network 106, via a Wi-Fi connection provided by the wireless access point 104, without a hub. The user's mobile device 108 also can access the network 106 (e.g., via a cellular connection). In some implementation, the mobile device 108 is configured to (and does) store and execute a software application (e.g., an app) to provide or facilitate one or more of the functionalities disclosed herein as being attributable to or involving the mobile device 108. In some implementations, the mobile device 108 is configured to (and does) provide access to a web-based resource (e.g., a website) to provide or facilitate one of more of the functionalities disclosed herein as being attributable to or involving the mobile device 108. In some implementations, the mobile device 108 implicates a combination of a local app and web-based resources to provide or facilitate one or more of the associated functionalities.

At a very basic level, the security monitoring system 100 is configured such that the security monitoring device 102, when appropriately triggered, can capture security-related data (e.g., images or video) about its surroundings (i.e., the monitored premises, e.g., at the user's home 114), and at least some of that data is presented at or made available for accessing or viewing from the user's mobile device 108. In some implementations, the security monitoring system 100 functions to actively alert users (e.g., 112) at their mobile devices (e.g., 108) of some potentially security-related event that is happening or has happened recently at the monitored premises. Thus, a user 112 leveraging the system 100 can rest assured knowing that, absent any indications to the contrary (e.g., alerts, etc.), the monitored premises (e.g., at the user's home 114) is safe and secure, and the user is able to specifically confirm this anytime and from virtually any location with his or her mobile device 108.

The security monitoring device 102, in a typical implementation, is battery-powered and, therefore, has a finite battery life. The battery typically is rechargeable. However, generally speaking, it is desirable to maximize battery life of the security monitoring device 102 so that recharging does not need to be done very frequently. Some of the techniques disclosed herein facilitate extending battery life.

The security monitoring device 102 has a Wi-Fi module that allows the security monitoring device 102 to connect to a wireless local area network (LAN), for example, using the 2.4 gigahertz ultra-high frequency and 5 gigahertz super high frequency radio bands. The security monitoring device 102 uses its Wi-Fi module to access the network 106, via a local wireless LAN. The security monitoring system 102 typically communicates with the remote security processing system 110 (and sometimes with the user mobile device 108 as well) utilizing this technology.

The security monitoring device 102 is generally configured to record (capture) security-related data (e.g., images and/or video, etc.) from its surroundings (i.e., the monitored premises). In some implementations, the security-related data may include other types of data including, for example, audio data captured by the device from the device's surroundings. In those cases, some or all of the other types of security-related data may be treated in a similar manner as described herein for the image or video data.

The security monitoring device 102 typically has a built-in camera for capturing the images or video. The security monitoring device 102 typically has a built-in motion detector, too, for detecting motion near the security monitoring device 102. In a typical implementation, if the motion detector detects motion near the security monitoring device 102, the camera in the security monitoring device 102 will turn on for some period of time and capture images or video of the monitored premises.

The security monitoring device 102 has a built-in processor. The built-in processor may (optionally) perform some light processing of the data (e.g., images or video) that it captures. The processor typically processes packets that are communicated over the wireless connection. With regard to packet processing, the processor of the security monitoring device 102 may have functionality that enables it to at least (when appropriate) apply and/or confirm appropriate TCP sequence numbers to packets transmitted between the security monitoring device 102 and some remote network destination (e.g., the remote security processing system 110). The processor may perform other types of processing as well, including payload processing on packets received at the security monitoring device 102 from the wireless connection.

The security monitoring device 102 can be placed virtually anywhere (within range of a Wi-Fi signal), and typically is placed in or near a person's home or other area of interest. The security monitoring device 102 enjoys a commercially-favorable battery life. The security monitoring device 102 and overall system 100 have a high degree of responsiveness to triggers (e.g., motion being sensed near the device 102, signals indicating that a user 112 has requested access to data (e.g., a video) of the space being monitored, or a settings update (e.g., a switch to/from privacy mode, where the device 102 is powered on but monitoring has been temporarily disabled by the user, or night mode, where the security monitoring performed by device 102 is optimized for nighttime environments, etc.). This high degree of responsiveness enables users to view of security-related data (e.g., images or video) captured by the security monitoring device 102 (e.g., by a camera therein), without noticeable delay, substantially in real time, from a user's mobile device 108. This, coupled with the long battery life, helps make the security system 100 a commercially attractive and technically robust system.

To help manage and maximize battery life, the security monitoring device 102 is generally able to switch between at least two different operating modes: a first (higher power) operating mode, and a second (lower power) operating mode.

Generally speaking, when the security monitoring device 102 is in the first (higher power) operating mode, its camera is actively capturing images or videos of the monitored premises, and/or its processor is processing captured images or video and/or transmitting those images or video, via the wireless connection, to a remote destination (e.g., the remote security processing system 110 for further processing and/or for viewing from a user's mobile device 108).

Generally speaking, the second (lower power) operating mode is a standby / sleeping / hibernating mode whereby the security monitoring device 102 is consuming very little power, and is waiting for a trigger that will cause it to enter or reenter the first (higher power) operating mode. Typically, when the security monitoring device 102 is in the second (lower power) operating mode, its camera is not capturing images or video, its processor is not processing images or video and not transmitting images or videos out from the security monitoring device 102. However, when the security monitoring device 102 is in the second (lower power) operating mode, the Wi-Fi module in the security monitoring device communicates over the wireless connection (e.g., with keep-alive packets) to keep the wireless connection alive. In this regard, when the security monitoring device 102 is in the second (lower power) operating mode, the Wi-Fi module processes these packets (e.g., by applying sequence numbers to and/or reviewing sequence numbers from packets).

In a typical implementation, when the security monitoring device 102 is in the second (lower power) operating mode, in the absence of an appropriate trigger, the security monitoring device 102 can, and typically does, remain in the second (lower power) operating mode indefinitely. The time that the security monitoring device 102 spends in the second (lower power) operating mode - consuming power at a lower rate than in the first (higher power) operating mode -- helps to extend the life of the battery in the security monitoring device 102. Generally speaking, the more time the security monitoring device 102 spends in the second (lower power) operating mode, the longer the battery will last.

If the security monitoring device 102 receives an appropriate trigger when it is in the second (lower power) operating mode, the security monitoring device 102 switches into the first (higher power) operating mode. In this mode, again, the camera in the security monitoring device 102 actively captures images or videos of the monitored premises, and/or the processor in the security monitoring device 102 processes captured images or video and/or transmits those images or video, via the network 106, to a remote destination (e.g., the remote security processing system 110 for further processing and/or for viewing from a user's mobile device 108). When the security monitoring device 102 is in the first (higher power) operating mode, the Wi-Fi module provides a link to the wireless connection, but any packet processing (including sequence management) is done by the processor.

When the security monitoring device 102 enters the first (higher power) operating mode it typically stays there for some (possibly predetermined) amount of time that is appropriate under the circumstances. For example, if the trigger was caused by the motion being detected in the monitored premises, then the security monitoring device 102 might remain in the first (higher power) operating mode until the motion detector ceases to detect motion, and then, perhaps, for some amount of time after that. As another example, if the trigger was caused by a user 112 requesting, from his or her mobile device 108, a view of the monitored premises, then the security monitoring device 102 might remain in the first (higher power) operating mode for at least some set (possibly predetermined, and/or user-specified) period of time. At the end of this set period of time, the security monitoring device 102 might revert back to the second (lower power) operating mode, unless some motion was detected in the monitored premises that made it reasonable for the security monitoring device 102 to keep collecting video, in which case, the security monitoring device 102 may remain in the first (higher power) operating mode (e.g., and keep recording and sending video) until the motion ceases to be detected, and perhaps for some short, predetermined period of time after that. If a trigger comes to the device 102 from the cloud, it typically will be accompanied by a secret, single use, wake-up token that gets negotiated by the device 102 and the remote security processing system 110 just before the device 102 enters a low power operating mode.

In general, it is desirable that the system 100 be able to react as quickly as possible to a trigger so that a user will be able to access images or video of the monitored premises collected by the camera in the security monitoring device 102 as quickly as possible. It is also desirable that the images or video presented to the user at the mobile device 108 be presented in as close to real time as possible. That way, if the security monitoring device 102 detects a motion (e.g., someone climbing in a window of the user's home 114), then images or video of the person climbing in the window can be presented to or made available for viewing by the user, at mobile device 108, virtually immediately, and the user will be able to see what is happening in almost real time. Likewise, if the user, on his or her own, submits a request (e.g., from mobile device 108) to view the monitored premises, then images or video of the monitored premises can be presented to or made available for viewing by the user, at mobile device 108, virtually immediately, and the user will be able to see what is happening in almost real time. Responsiveness and close to real-time viewing can be key to enabling a user to react quickly and in a meaningful way, to thwart criminal behavior, for example.

One way that the security monitoring device 102 can help to facilitate quick reaction time is by maintaining the same wireless connection, continuously, to the remote security processing system 110 (via network 106), even as the security monitoring device 102 switches back and forth between the first (higher power) operating mode and the second (lower power) operating mode. As the security monitoring device 102 switches back and forth between operating modes, the security monitoring device 102 switches control (e.g., responsibility for packet processing, including managing TCP sequence numbering for packets) over the wireless connection back and forth between the processor (when the security monitoring device 102 is in the first (higher power) operating mode) and the Wi-Fi module (when the security monitoring device 102 is in the second (lower power) operating mode). At each transition, the security monitoring device 102 stores information about the wireless connection (e.g., the current sequence number for communications on the wireless network) in a manner that facilitates continual operation of the wireless connection and rapid switching between operating modes. In this regard, the security monitoring device 102 typically stores the connection information in a high speed memory module, such as a double data rate, random access memory (DDR RAM) module in the security monitoring device 102. The ability to switch rapidly between operating modes is particularly important when switching from the second (lower power) operating mode, where no video is being collected or transmitted, to the first (higher power) operating mode.

In a typical implementation, therefore, the security monitoring device 102 has an internal processor and a separate internal module for supporting wireless communications functionalities (e.g., a Wi-Fi module). The security monitoring device 102 is configured to switch, during operation, between: a first (higher power) operating mode in which the processor performs, among other things, packet processing (e.g., assigning and assessing sequence numbers for communications) for the wireless connection on behalf of the security monitoring device 102, and a second (lower power) operating mode in which the processor is in a reduced power state (e.g., sleeping, hibernating, etc.) and the Wi-Fi module (not the processor) performs packet processing (e.g., assigning and assessing sequence numbers for communications) for the wireless connection on behalf of the security monitoring device 102. Typically, packet processing refers to, or at least includes, managing sequence numbers (e.g., TCP sequence numbers) associated with packet communications on the wireless connection.

Most of the packet processing that occurs when the security monitoring device 102 is in the second (lower power) operating mode only involves processing of keep-alive packets, and this is done by the Wi-Fi module. If the Wi-Fi module receives a different kind of packet (other than a keep-alive packet), such as a trigger to reenter the first (higher power) operating mode, the security monitoring device 102 reacts accordingly. In a typical implementation, the processor in the security monitoring device 102 does not perform any packet processing when the security monitoring device 102 is in the second (lower power) operating mode.

The processor uses the Wi-Fi module to access the wireless LAN for purposes of communicating with the remote processing system 110, etc. via the wireless connection over network 106 when the security monitoring device 102 is in the first (higher power) operating mode. In a typical implementation, the Wi-Fi module performs no packet processing (e.g., managing sequence numbers or sequencing) when the security monitoring device 102 is in the first (higher power) operating mode.

In a typical implementation, when the security monitoring device 102 is in the first (higher power) operating mode, each time a packet is transmitted on the wireless connection, that sequence number may be stored in a memory storage device (e.g., DDR RAM) in the security monitoring device 102.

When the security monitoring device 102 switches from the first (higher power) operating mode to the second (lower power) operating mode, the then-current (or latest) sequence number associated with packets transmitted over the wireless connection is transferred from the memory storage device to the Wi-Fi module.

At that point forward, for as long as the security monitoring device 102 is in the second (lower power) operating mode, the Wi-Fi module essentially maintains and controls the wireless connection (e.g., by periodically sending keep-alive packets to the remote processing system over the wireless connection). During this period, the Wi-Fi module assigns each keep-alive packet a sequence number that continues, sequentially, from whatever sequence number was transferred to the Wi-Fi module when the security monitoring device 102 switched into the second (lower power) operating mode.

If a trigger occurs, the security monitoring device 102 then switches from the second (lower power) operating mode to the first (higher power) operating mode. When the security monitoring device 102 switches from the second (lower power) operating mode to the first operating mode, a then-current sequence number associated with packets on the wireless connection is transferred from the Wi-Fi module to an operating system for the processor. After that happens, the processor periodically communicates with the remote processing system 110 over the wireless connection, and controls packet processing, including managing associated sequence numbering, for those communications. In this regard, each periodic communication from the processor in the security monitoring device 102 to the remote processing system 110 typically has a number assigned to it from a sequence that begins at and continues, sequentially, from the sequence number transferred from the Wi-Fi module when the security monitoring device 102 switched to the first (higher power) operating mode.

The trigger that causes that security monitoring device 102 to switch from the second (lower power) operating mode to the first (higher power) operating mode can be any one of a variety of different triggers. Some examples include a signal (e.g., from a motion detector in the security monitoring device 102) indicating that a motion has been detected near the security monitoring device 102, a signal (e.g., from the cloud) indicating that a system user 112 has requested access (from his or her user device 118) to data captured by the security monitoring device 102, a system- or user-initiated settings change (e.g., a switch into a privacy mode, etc.) that gets relayed from an app on a user's smartphone to a remote processing system, or a loss of connection between security monitoring device 102 and network 106 or remote security processing system 110.

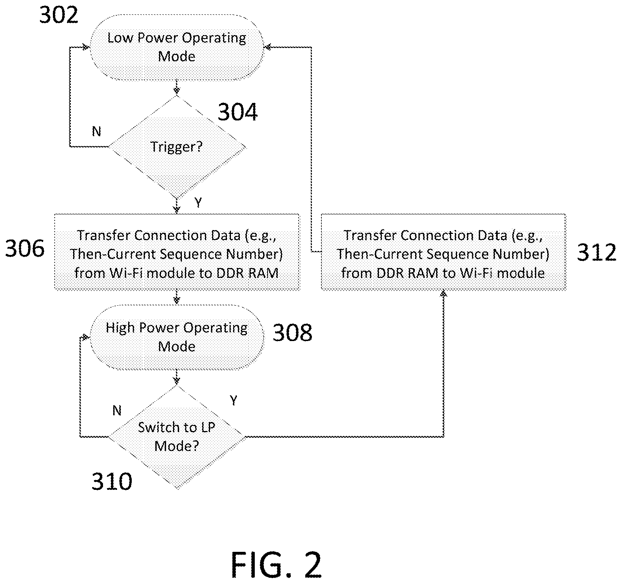

FIG. 2 is a flowchart showing an exemplary process for controlling wireless communications over a wireless connection between the security monitoring device 102 in FIG. 1 and the remote security processing system 110.

According to the illustrated implementation, the security monitoring device 102 (at 302) is in a low power operating mode. In a typical implementation, when the security monitoring device 102 is in the low power operating mode (at 302), its camera is not capturing data, its processor is in a low power (sleeping / hibernating) mode, and its Wi-Fi module (not its processor) is controlling communications over the wireless connection (including managing sequence numbers for those communications).

As illustrated, the security monitoring device 102 remains in this low power operating mode until and unless a trigger occurs. If a trigger occurs (at 304), control over the wireless connection communications passes, in large part, from the Wi-Fi module to the processor. In this regard, connection data (including, e.g., the then-current sequence number for communications on the wireless connection) is transferred (at 306) from the Wi-Fi module to the DDR RAM in the security processing system, and the security monitoring device 102 (at 308) enters a high power operating mode.

In a typical implementation, when the security monitoring device 102 is in the high power operating mode, its camera may be capturing data and its processor is controlling certain aspects of the communications over the wireless connection (including managing sequence numbers for those communications).

As illustrated, the security monitoring device 102 remains in this high power operating mode (at 308) for some (possibly predetermined) amount of time that is appropriate under the circumstances.

For example, if the trigger was caused by the motion being detected in the monitored premises, then the security monitoring device 102 might remain in the high power operating mode until the motion detector ceases to detect motion, and then, perhaps, for some amount of time after that. As another example, if the trigger was caused by a user (e.g., 112) requesting, from his or her mobile device 108, a view of the monitored premises, then the security monitoring device 102 might remain in the high power operating mode for at least some set (possibly predetermined, and/or user-specified) period of time. At the end of this set period of time, the security monitoring device 102 might revert back to the low power operating mode, unless some motion is being detected in the monitored premises that made it reasonable for the security monitoring device 102 to keep collecting video, in which case, the security monitoring device 102 may remain in the high power operating mode (and keep recording / sending video) until the motion ceases to be detected, and perhaps for some short, predetermined period of time after that.

According to the illustrated example, if/when the security monitoring device 102 (e.g., with its processor) determines (at 310) that it should switch back to the low power operating mode (302), the connection data (including, e.g., the then-current sequence number for communications over the wireless connection) is transferred (at 312) from the DDR RAM memory to the Wi-Fi module.

In a typical implementation, just before the security monitoring device 102 enters the low power operating mode, the security monitoring device 102 and the remote security processing system 110 negotiate a wake-up token. Once negotiated, the wake-up token can be used by the remote security processing system 110 to trigger (or cause) the security monitoring device 102 to exit a low power mode. In a typical implementation, the wake-up token is secret and intended as a single-use token (i.e., it is only usable, if at all, during one low power mode).

When the security monitoring device 102 enters the low power operating mode 302, the processor typically enters a low power (sleeping / hibernating) mode, and the Wi-F mobile assumes a greater degree of control over communications on the wireless connection (including managing sequence numbers for those communications).

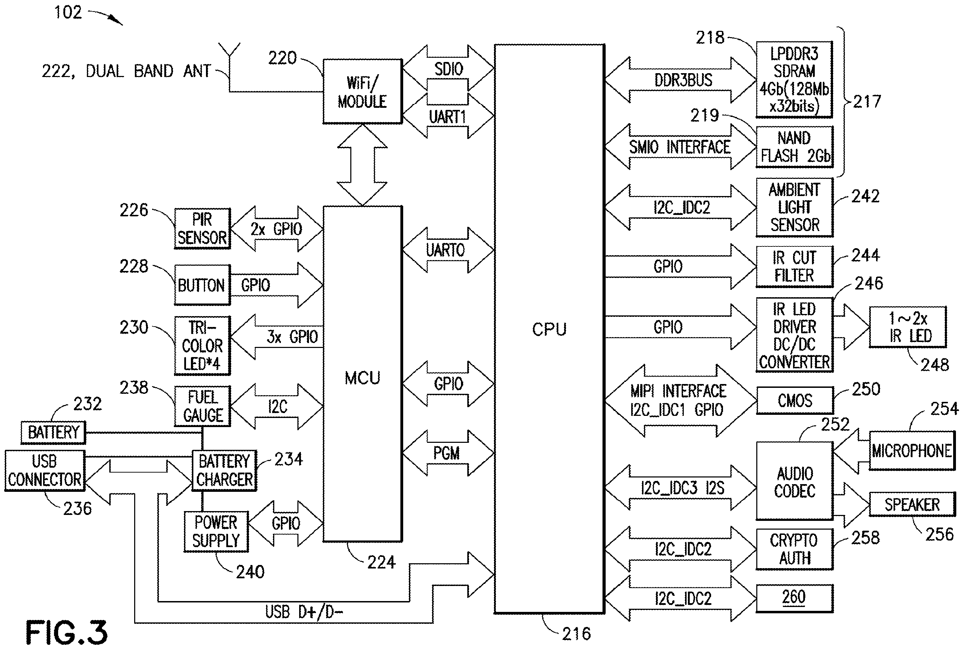

FIG. 3 is a partial schematic representation of one implementation of the security monitoring device 102 in FIG. 1.

The security monitoring device 102, according to the illustrated implementation, has a processor (i.e., CPU) 216, memory 217 (including a low power, double data rate synchronous dynamic random access memory module (LP DDR SDRAM) 218 and a NAND flash memory module 219), and a Wi-Fi module 220. The Wi-Fi module 220 in the illustrated implementation is coupled to a dual band antenna 222.

The processor 216 can be virtually any kind of processor (e.g., central processing unit) that is able to perform processing in accordance with at least the techniques specifically disclosed herein. In one particular implementation, the processor 216 is a camera processor that is able to integrate, for example, an image sensor pipeline (ISP), sensor and video I/O, front end sensor processing, image processing, intelligent video analytics, video encoding, memory, peripheral interfaces, etc. One example of a processor that may be suitable or adapted to use in accordance with the present disclosure is an S2L63 style processor, available, for example, from Ambarella, Inc. of Santa Clara, California.

The memory 217 in the security monitoring device 102 can include various types of memory. In the illustrated example, the memory 217 includes a low power, double data rate, synchronous, dynamic random access memory (LP DDR SDRAM) 218 and a NAND flash module 219.

Generally speaking, random-access memory (RAM) is a form of computer data storage that is considered "random access" because any memory cell can be accessed directly by specifying, for example, a row and column that intersect at that cell. Typically, RAM allows data items to be accessed (e.g., read or written) in almost the same amount of time irrespective of the physical location of data inside the memory. Dynamic random-access memory (DRAM) is a type of RAM that stores each bit of data in a separate capacitor within an integrated circuit. The capacitor can be either charged or discharged; these two states are taken to represent the two values of a bit, conventionally called 0 and 1. Since even non-conducting transistors always leak a small amount, the capacitors will slowly discharge, and the information eventually fades unless the capacitor charge is refreshed periodically. Because of this, it is referred to a dynamic memory as opposed to static RAM (SRAM) and other static types of memory. SDRAM (synchronous DRAM) is a generic name for various kinds of dynamic random access memory (DRAM) that are synchronized with clock speed that the microprocessor is optimized for. This tends to increase the number of instructions that the processor can perform in a given time. DDR SDRAM refers to double data rate synchronous dynamic random-access memory. Compared to single data rate (SDR) SDRAM, DDR SDRAM interfaces make higher transfer rates possible by more strict control of the timing of the electrical data and clock signals. The interface generally uses double pumping (transferring data on both the rising and falling edges of the clock signal) to double data bus bandwidth without a corresponding increase in clock frequency. Finally, the phrase "low power" used in conjunction with DDR SDRAM indicates a slightly modified form of DDR SDRAM, with several changes to reduce overall power consumption. In one exemplary implementation, the low power DDR SDRAM has a capacity of approximately 4Gb (e.g., 128 MB x 32 bits), though other capacities are, of course possible. The low power DDR SDRAM in the illustrated implementation is coupled to the processor 216 via a DDR Bus.

Generally speaking, flash memory is an electronic (solid state) non-volatile computer storage medium that can be electrically erased and reprogrammed. NAND flash memory is a specific type of flash memory that does not require power to retain data. In one exemplary implementation, the NAND flash memory module 219 has a capacity of 4Gb, though other capacities are, of course, possible. The NAND flash module 219 in the illustrated example is coupled to the processor 216 by an SMIO interface.

The Wi-Fi module 220 can be virtually any kind of module that enables the security monitoring device 102 to access and communicate over a wireless LAN. In some implementations, the Wi-Fi module 220 is a relatively low-power consumption module, with integrated dual bands (2.4GHz/5GHz) IEEE 802.11 a/b/g and single-stream IEEE 802.11n MAC/baseband/radio and Bluetooth 4.0. One example of this kind of Wi-Fi module is the AMPAK 6234 module, available from Ampak Technology, Inc. in Taiwan. As mentioned above, the Wi-Fi module 220 in the illustrated implementation is coupled to a dual band antenna 222. Typically, the Wi-Fi module 220 utilizes a pair of crystals oscillating at different frequencies (e.g., at 37.4 MHz and 32.768 KHz, respectively). The Wi-Fi module 220 in the illustrated implementation is coupled to the processor 206 by a secure digital input output (SDIO) interface and by a universal asynchronous receiver/transmitter (UART) interface.

The security monitoring device 102 has a microcontroller (MCU) 224. The MCU 224 can be virtually any kind of MCU. Generally speaking, an MCU is a small computer on a single integrated circuit and may contain a processor core, memory, and programmable input-output peripherals. Program memory in the form of ferroelectric RAM, NOR flash or OTP ROM, for example, may also be included on the chip, as well as a typically small amount of RAM. One example of the MCU 224 is an MSP 430 style low power microcontroller. In a typical implementation the MCU 224 utilizes a crystal (not shown) oscillating, for example, at 32.768 KHz.

The MCU 224 in the illustrated implementation is coupled to the processor 216 by a UART interface, a general purpose input/output (GPIO) interface and a pragmatic general multicast (PGM) interface. The MCU 224 in the illustrated implementation is coupled to the Wi-Fi module 220 via a GPIO interface as well.

The security monitoring device 102 has a passive infrared (PIR) sensor 226. The PIR sensor 226 can be virtually any kind of sensor that senses infrared radiation. Generally speaking, a PIR sensor is an electronic sensor that measures infrared (IR) light radiating from objects (e.g., persons) in its field of view. They are most often used in association with PIR-based motion detection. One example of a PIR sensor is a PYD 1698 style pyro-electric detector. The illustrated PIR sensor 226 is coupled to the MCU 224 by a pair of GPIO interfaces.

The security monitoring device 102 has a button 228 that may be exposed at an external surface of its housing. The button 228 can be virtually any kind of button, switch, or the like and, in various implementations, may be operable to provide one or more functionalities in the security monitoring device 102. For example, in some implementations, pressing the button 228 may be used to initiate, or as part of, the system 100 startup process. In some implementations, pressing the button 228 may cause the security monitoring device 102 to shift into or remain in the first (higher power) operating mode. Other button functionalities are possible as well. In the illustrated implementation, the button is coupled to the MCU 224 by a GPIO interface,

The security monitoring device 102 has one or more light emitting diodes 230 exposed at an external surface of its housing. The light emitting diodes 230 can be virtually any kind of light emitting diodes. According to the illustrated implementation, there are four, tri-color light emitting diodes 230. Other implementations may, of course, have a different number of LEDs (e.g., six, etc.). In the illustrated implementation, the light emitting diodes 230 are coupled to the MCU 224 by three (3) GPIO interfaces. Other implementations may, of course, have a different number of interfaces. In a typical implementation, the security monitoring device 102 is operable to illuminate the light emitting diodes 230 in a variety of different ways to indicate one or more fault conditions, for example, at the security monitoring device 102 or elsewhere in the system 100.

The security monitoring system 102 has a power system that includes a battery 232, a battery charger 234, a USB connector 236, a fuel gauge 238 and a power supply 240 for the MCU.

The battery 232 can be virtually any kind of battery. In a typical implementation, the battery 232 may include a pair of batteries, each battery being configured to supply up to 3200 mA at about 3 to 4.2 volts.

The fuel gauge 238 is coupled to the battery 232, battery charged 234 and the MCU 224 (via an inter-integrated circuit (I²C interface). The fuel gauge 238 can be virtually any kind of fuel gauge. Generally speaking, the fuel gauge 238 is configured to track battery 232 status information and to provide at least of that information to the MCU 224. In various implementations, this information may include remaining battery capacity (mAh), state of charge (%), battery voltage (mV), etc. The MCU 224 may be operable generally to process information it receives from the fuel gauge 238 so that the security monitoring device 102 can react accordingly (e.g., by causing one or more of the LEDs 230 to illuminate if the battery requires recharging).

The battery charger 234 is connected to the battery 232 (and fuel gauge 238), the USB connector 236 and the power supply 240. The battery charger 234 can be virtually any kind of battery charger that is suitable to charge the battery 232. One example of a suitable battery charger is a BQ24295 charger, available from Texas Instruments, Inc. The BQ24295 is a highly-integrated switch-mode battery charge management and system power path management devices for 1 cell Li-Ion and Li-polymer battery, for example, in a wide range of power bank, tablet and other portable device applications.

In a typical implementation, if the battery 232 is sufficiently charged, battery power is provided essentially through the charger 234 to the power supply 240 for the MCU 224. On the other hand, in a typical implementation, if the battery is not sufficiently charged, an external power source can be connected to the USB connector 236 and power from that external power supply can be provided to the battery charger 234, which uses the power to charge the battery 232 and also uses the power to feed the power supply 240. In a typical implementation, the security monitoring device remains in the first operating mode when it is being charged, but it may also be configured to be in the second operating mode while being charged to increase charging speed.

The USB connector 236 also facilitates the delivery of data. The data can travel within the security monitoring device 102 on the USB D+/D- data bus, which connects to the battery charger 234 and to the CPU 216.

The power supply 240 can be virtually any kind of power supply suitable for powering the MCU 224. Generally speaking, a power supply is an electronic device that supplies electrical energy to an electrical load. A main function of a power supply is to convert one form of electrical energy to another and, as a result, power supplies are sometimes referred to as electric power converters. In the illustrated security monitoring device 102, the power supply 240 converts the battery voltage or, more precisely, the voltage exiting the battery charger, to a form of electric energy suitable for the MCU 224. Moreover, in the illustrated implementation, the power supply 240 is coupled to the MCU 224 by a GPIO interface.

The security monitoring device 102 has an ambient light sensor 242. The ambient light sensor 242 can be virtually any kind of ambient light sensor. The ambient light sensor 242 is generally operable to sense ambient light around the security monitoring device 102. The security monitoring device 102 may be generally configured to act differently depending on what the ambient light sensor is sensing. One example of a suitable ambient light sensor is a JSA-1214 style ambient light sensor. The ambient light sensor 242 in the illustrated implementation is coupled to the CPU 216 by an I2C_IDC2 interface.

The security monitoring device 102 has an infrared (IR) cut filter module 244. The IR cut filter module 244 can include virtually any kind of IR cut filter and virtually any kind of driver. Generally speaking, the security monitoring device 102 is operable such that, when exposed to daylight, the IR cut filter module 244 filters out IR light so that it does not distort the colors of images, but when the security monitoring device 102 is in night mode, the IR cut filter is disengaged and thus allows the device's light sensitivity to increase, especially in the IR and near IR spectrums.. One example of a suitable IR cut filter module 244 is the AP1511A IR filter switch driver with one-shot output for IR cut removing, available from Hsin-Bao Corporation. In the illustrated implementation, the IR cut filter module 244 is coupled to the CPU 216 by a GPIO interface.

The security monitoring device 102 has an infrared (IR) light emitting diode module 248 and a DC/DC driver 246 for the IR LEDs. The driver 246 in the illustrated implementation is coupled to the processor 216 by a GPIO interface.

The security monitoring device 102 has a camera 250. The camera 250 can be virtually any kind of device that is able to capture images or video from the monitored premises. The camera 250 in the illustrated example is based on complementary metal oxide (CMOS) image sensing technology. One example of a suitable CMOS image sensor is an IMX323 sensor, available from Sony, for example. The camera 250 is coupled to the processor 216 by a mobile industry processor interface (MIPI), I²C_IDC1, GPIO interface.

The security monitoring device 102 has a microphone 254, a speaker 256 and an audio codec 252 for the microphone 254 and the speaker 256. Generally speaking, an audio codec is a device or program capable of coding and/or decoding a digital data stream of audio. One example of a suitable audio codec is a TLV320AIC3101, available from Texas Instruments. The audio codec 252 in the illustrated implementation is coupled to the processor 216 by I²C and I2S interfaces.

The security monitoring device 102 has a cryptographic co-processor 258. This co-processor can help authenticate and ensure, for example, that code is real, untampered, and confidential. One example of a suitable cryptographic co-processor 258 is a the ATECC508A cryptographic co-processor, available from Atmel. The cryptographic co-processor 258 is coupled to the processor 216 by an I²C_IDC2 interface.

The security monitoring device 102 has an authentication chip 260 to help validate identity and integrity of the security monitoring device 102 when it is part of a home automation ecosystem, for example. The authentication chip 260 is coupled to the processor by an I²C_IDC2 interface.

In a typical implementation, when the system 100 is initially started up, the processor 216 in the security monitoring device 102 utilizes the Wi-Fi module 220 to establish a wireless connection over the network 106 (via wireless access point 104) to the remote security processing system 110. Generally speaking, establishing this connection may involve using a transmission control protocol (TCP) three-way handshake process, which is an automatic negotiation process that dynamically sets parameters of the wireless connection, or communications channel, between the security monitoring device 102 and the remote security processing system 110. An exemplary three-step handshake process is described below.

Typically, before the processor 216 in the security monitoring device 102 even attempts to connect with the remote security processing system 110, the remote security processing system 110 binds to and listens at a port to open it up for connections. Then the processor 216 in the security monitoring device 102 initiates the three-step by performing a synchronize step (step 1 of 3). In the synchronize step, the processor 216 in the security monitoring device 102 sends a synchronize flag (SYN) to the remote security processing system 110. The processor 216 in the security monitoring device 102 may set the segment's sequence number to a random value A. The remote security processing system 110 responds, in an acknowledgement step (step 2 of 3), by sending an acknowledgement that the synchronize flag has been received (SYN-ACK). An acknowledgment number may be set to one more than the received sequence number i.e. A+1, and the sequence number that the remote security processing system 110 chooses for the packet may be another random number, B. Next, the processor 216 in the security monitoring device 102 sends an acknowledgement (ACK) back to the remote security processing system 110 in an acknowledgement step (step 3 of 3). The sequence number may be set to the received acknowledgement value i.e. A+1, and the acknowledgement number may be set to one more than the received sequence number i.e. B+1.

At this point, both the processor 216 in the security monitoring device 102 and the remote security processing system 110 have received an acknowledgment of the connection. Steps 1 and 2 established a connection parameter (sequence number) for one direction (security monitoring device 102 to the remote security processing system 110) and that parameter has been acknowledged. Steps 2 and 3 established a connection parameter (sequence number) for the other direction (remote security processing system 110 to security processing device 102) and that parameter has been acknowledged. Generally speaking, TCP sequence numbers are then used in subsequent communications between these network entities.

This represents one exemplary technique for establishing a wireless connection between the security monitoring device 102 and the remote security processing system 110. Other techniques are possible.

In a typical implementation, when the security monitoring device 102 is in the first (higher power) operating mode, the processor 216 in the security monitoring device 102 controls the TCP wireless connection between the security monitoring device 102 and the remote security processing system 110. During this period of time, the processor 216 utilizes the separate Wi-Fi module 220 to access the Wi-Fi network, but the processor 216 performs the associated TCP processing, including managing and/or keeping track of TCP sequence numbers associated with communications with the remote processing device 110. In a typical implementation, the processor 216 tracks and stores the TCP sequence using a memory 217 (e.g., DDR RAM 218) in the security monitoring device 102 that may, in some instances, be the same memory 218 that stores the operating system for the processor 216.

When the security monitoring device 102 switches into the second (lower power) operating mode, the processor 216 goes to sleep. In a typical implementation, the operating system for the processor 220 is in suspended animation or in a low power self refresh state when the processor 220 goes to sleep.

At this point, the then-current TCP sequence number for communications between the security monitoring device 102 may be transferred from memory 218 to the Wi-Fi module 220. The Wi-Fi module 220 takes over control of the TCP wireless connection to the remote security processing system 110, while the security monitoring device 102 is in the second (lower power) operating mode. In this regard, in a typical implementation, the Wi-Fi module 220 periodically sends keep-alive messages across the TCP wireless connection to the remote security processing system 110 applying a TCP sequence number to each packet, starting at the TCP sequence number that was transferred to the Wi-Fi module 220 when the security monitoring device switched into the second (lower power) operating mode.

When the processor 218 wakes-up due to a trigger (e.g., due to the PIR sensor 226 detecting a motion or a cloud wakeup signal arriving at the security monitoring device 102), the then-current sequence number for the TCP wireless connection is transferred from the Wi-Fi module 220 to the operating system for the processor 216, which is stored in memory 217. The processor 216 then takes control again over the wireless connection to the remote security processing system 110, including control over managing packet TCP sequence numbers.

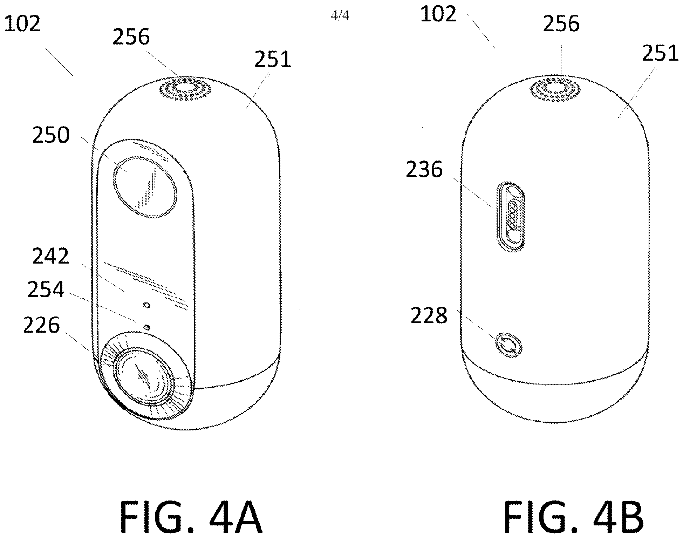

FIGS. 4A and 4B are perspective views (front and back, respectively) showing an exemplary implementation of the security monitoring device 102.

The illustrated security monitoring device 102 has a housing 251 that is substantially capsule-shaped with a flat front surface. There is a lens for a PIR sensor 226, a lens for a camera 250, a pair of apertures for an ambient light sensor 242 and a microphone 254 exposed at a flat front surface of the housing 251. There are openings for a speaker 256 at the top of the housing 251. There is a button 228 and a USB connector 236 at a rear of the housing.

A number of embodiments of the invention have been described. Nevertheless, it will be understood that various modifications may be made without departing from the scope of the invention.

For example, the system (e.g. 100) described herein is a security system and the device (e.g., 102) described herein is a security monitoring system. However, this need not be the case. Indeed, the device can be virtually any kind of device (e.g., one that monitors or collects data) that communicates over a network connection to some remote destination (e.g., a server or cloud-based resource).

The device (e.g., 102) can include any one or more of a variety of different sensors, some of which were mentioned above. In various implementations, these sensors can be or can be configured to detect any one or more of the following: light, power, temperature, RF signals, a scheduler, a clock, sound, vibration, motion, pressure, voice, proximity, occupancy, location, velocity, safety, security, fire, smoke, messages, medical conditions, identification signals, humidity, barometric pressure, weight, traffic patterns, power quality, operating costs, power factor, storage capacity, distributed generation capacity, UPS capacity, battery life, inertia, glass breaking, flooding, carbon dioxide, carbon monoxide, ultrasound, infra-red, microwave, radiation, microbes, bacteria, viruses, germs, disease, poison, toxic materials, air quality, lasers, loads, load controls, etc. Any variety of sensors can be included in the device. In some implementations, some of the sensors may cycle on and off (or between an active and hibernating state) as the device 102 switches between the low power and high power operating modes.

Of course, the device 102 can be adapted to switch modes (e.g., from the low power mode to the high power mode) in response to a variety of different triggers and types of triggers. For example, in some implementations, the trigger may be a sound captured by a microphone on the device 102, and the device 102 may be configured to switch into the high power (data collecting) mode in response to the microphone capturing a particular sound. Other variations are possible as well. Moreover, it is possible, in some implementations, that the trigger be based on a combination of signals (e.g., from different sensors) in the device.

Much of what is described here focuses on transport control protocol (TCP) including, e.g., TCP sequence numbering. However, the concepts disclosed herein can be applied to a variety of other protocols as well.

A variety of different types of data, including connection data, may be stored and/or transferred between subcomponents of the device, when the device switches between modes.

A typical system may include multiple devices and multiple user devices (e.g., mobile phones).

The system may or may not be hubless. Moreover, the device may or may not be battery-powered. The device may communicate images or video, or may be configured to communicate any other type of data.

In various implementations, one or more of the devices and system components disclosed herein may be configured to communicate wirelessly over a wireless communication network via one or more wireless communication protocols including, but not limited to, cellular communication, ZigBee, REDLINK^{™}, Bluetooth, Wi-Fi, IrDA, dedicated short range communication (DSRC), EnOcean, and/or any other suitable common or proprietary wireless protocol.

It should be understood that relative terminology used herein, such as " upper", " lower", " above", " below", " front", " rear," etc. is solely for the purposes of clarity and is not intended to limit the scope of what is described here to require particular positions and/or orientations. Accordingly, such relative terminology should not be construed to limit the scope of the present application.

In some implementations, certain functionalities described herein may be provided by a downloadable software application (i.e., an app). The app may, for example, implement or facilitate one or more of the functionalities described herein.

In various embodiments, the subject matter disclosed herein can be implemented in digital electronic circuitry, or in computer-based software, firmware, or hardware, including the structures disclosed in this specification and/or their structural equivalents, and/or in combinations thereof. In some embodiments, the subject matter disclosed herein can be implemented in one or more computer programs, that is, one or more modules of computer program instructions, encoded on computer storage medium for execution by, or to control the operation of, one or more data processing apparatuses (e.g., processors). Alternatively, or additionally, the program instructions can be encoded on an artificially generated propagated signal, for example, a machine-generated electrical, optical, or electromagnetic signal that is generated to encode information for transmission to suitable receiver apparatus for execution by a data processing apparatus. A computer storage medium can be, or can be included within, a computer-readable storage device, a computer-readable storage substrate, a random or serial access memory array or device, or a combination thereof. While a computer storage medium should not be considered to include a propagated signal, a computer storage medium may be a source or destination of computer program instructions encoded in an artificially generated propagated signal. The computer storage medium can also be, or be included in, one or more separate physical components or media, for example, multiple CDs, computer disks, and/or other storage devices.

Various operations described in this specification can be implemented as operations performed by a data processing apparatus (e.g., a processor) on data stored on one or more computer-readable storage devices or received from other sources. The term "processor" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application specific integrated circuit). The apparatus can also include, in addition to hardware, code that creates an execution environment for the computer program in question, for example, code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

While this specification contains many specific implementation details, these should not be construed as limitations on the scope of any inventions or of what may be claimed, but rather as descriptions of features specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings and described herein as occurring in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Furthermore, some of the concepts disclosed herein can take the form of a computer program product accessible from a computer-usable or computer-readable medium providing program code for use by or in connection with a computer or any instruction execution system. For the purposes of this description, a computer-usable or computer readable medium can be any tangible apparatus that can contain, store, communicate, propagate, or transport the program for use by or in connection with the instruction execution system, apparatus, or device.

The medium can be an electronic, magnetic, optical, electromagnetic, infrared, or semiconductor system (or apparatus or device) or a propagation medium. Examples of a computer-readable medium include a semiconductor or solid-state memory, magnetic tape, a removable computer diskette, a random access memory (RAM), a read-only memory (ROM), a rigid magnetic disk and an optical disk. Current examples of optical disks include compact disk-read only memory (CD-ROM), compact disk-read/write (CD-R/W) and DVD.

Various functionalities associated with the system disclosed herein can be accessed from virtually any kind of electronic computer device, including, for example, smart phones and tablet.

Additionally, the security monitoring device may be configured to include any one or more (or no) other sensors or data collecting devices or components including, for example, security or safety monitors, sensors of any one or more of the following: light, power, temperature, RF signals, scheduling, time, sound, vibration, motion, pressure, voice, proximity, occupancy, location, velocity, safety, security, fire, smoke, messages, medical conditions, identification signals, humidity, barometric pressure, weight, traffic patterns, power quality, operating costs, power factor, storage capacity, distributed generation capacity, UPS capacity, battery life, inertia, glass breaking, flooding, carbon dioxide, carbon monoxide, ultrasound, infra-red, microwave, radiation, microbes, bacteria, viruses, germs, disease, poison, toxic materials, air quality, lasers, loads, load controls, etc.

Other implementations are within the scope of the claims.

## Claims

1. A system comprising:
a first device (102) comprising a processor (216) and a Wi-Fi module (220); and
a remote processing system (110) coupled to the first device via a wireless connection across a network (106),
wherein the first device (102) is configured to switch, during operation, between:
a first operating mode (308) in which the processor (216) performs packet processing for the wireless connection on behalf of the first device (102), and
a second operating mode (302) in which the processor (216) is in a reduced power state and the Wi-Fi module (220) performs packet processing for the wireless connection on behalf of the first device (102),
**characterised in that** the system is configured such that:
when the first device (102) switches from the first operating mode (308) to the second operating mode (302), a then-current sequence number associated with packets transmitted over the wireless connection is transferred (312) from a computer-based memory in the first device to the Wi-Fi module, or
when the first device (102) switches from the second operating mode (302) to the first operating mode (308), a then-current sequence number associated with packets transmitted over the wireless connection is transferred (306) from the Wi-Fi module to an operating system for the processor.

2. The system of claim 1, wherein the processor (216) does not perform packet processing when the first device (102) is in the second operating mode (302).

3. The system of claim 1, wherein the packet processing comprises managing sequence numbers associated with packet communications on the wireless connection.

4. The system of claim 1, wherein the processor (216) of the first device (102) utilizes power at a higher rate when the first device (102) is in the first operating mode (308) as compared to when the first device (102) is in the second operating mode (302).

5. The system of claim 1, wherein the processor (216) in the first device (102) uses the Wi-Fi module (220) to access a Wi-Fi link for purposes of communicating with the remote processing system (110) via the wireless connection when the first device (102) is in the first operating mode (308).

6. The system of claim 1, wherein the Wi-Fi module (220) is configured to maintain the wireless connection when the first device (102) is in the second operating mode (302) by periodically sending keep-alive packets to the remote processing system (110) over the wireless connection.

7. The system of claim 6, wherein each keep-alive packet includes an associated sequence number continuing from the sequence number that was transferred to the Wi-Fi module (220) when the first device (102) switched to the second operating mode (302).

8. The system of claim 1, wherein the computer-based memory is double data rate, random-access memory.

9. The system of claim 1, wherein the system is further configured such that, after the first device (102) switches from the second operating mode (302) to the first operating mode (308) and the then-current sequence number is transferred from the Wi-Fi module (220) to the operating system for the processor, the processor (216) periodically communicates with the remote processing system (110) over the wireless connection, and
wherein each periodic communication from the processor (216) to the remote processing system (110) has a corresponding number from a sequence that begins at and continues, sequentially, from the sequence number transferred from the Wi-Fi module (220) when the first device (102) switched to the first operating mode (308).

10. The system of claim 1, wherein the first device (102) is configured to switch from the second operating mode (3020 to the first operating mode (308) in response to a trigger, and wherein the trigger is selected from the group consisting of:
a signal indicating that a motion has been detected near the first device,
a signal indicating that a system user has requested access to data captured by the first device; and
a signal indicating a settings change for the first device.

11. The system of claim 1, wherein the first device (102) is a security monitoring device and the security monitoring device comprises:
a camera for capturing images or video, and
a motion detector for detecting motion near the security monitoring device, and
wherein the remote processing device is a security processing device and is configured to process data captured by the security monitoring device.

12. The system of claim 11, wherein the security monitoring device is configured such that:
when the security monitoring device (102) is in the first operating mode (308), the camera is actively capturing images or video, and the processor (216) is processing the captured images or video and/or transmitting the captured images or video, via the wireless connection, to the remote computer-based processing system for further processing and/or for accessing from a user device (108); and
when the security monitoring device (102) is in the second operating mode (302), the camera is not actively capturing images or video, the processor is a low power state, the motion detector is watching for detected motion, and the Wi-Fi module is maintaining the wireless connection.

13. The system of claim 1, further comprising:
a user device (108) coupled to the wireless network,
wherein the user device (108) is configured to enable a user to access and view data captured by the first device (102) at the user device (108).

## Patentansprüche

1. System, umfassend:
eine erste Vorrichtung (102), die einen Prozessor (216) und ein Wi-Fi-Modul (220) umfasst; und
ein Fernverarbeitungssystem (110), das mit der ersten Vorrichtung mittels einer Drahtlosverbindung über ein Netzwerk (106) verbunden ist,
wobei die erste Vorrichtung (102) konfiguriert ist, um während des Betriebs umzuschalten zwischen:
einem ersten Betriebsmodus (308), bei dem der Prozessor (216) eine Paketverarbeitung für die Drahtlosverbindung für die erste Vorrichtung (102) ausführt, und
einem zweiten Betriebsmodus (302), bei dem der Prozessor (216) in einem Zustand mit verringerter Leistung ist und das Wi-Fi-Modul (220) eine Paketverarbeitung für die Drahtlosverbindung für die erste Vorrichtung (102) ausführt,
**dadurch gekennzeichnet, dass** das System so konfiguriert ist, dass:
wenn die erste Vorrichtung (102) vom ersten Betriebsmodus (308) in den zweiten Betriebsmodus (302) umschaltet, eine dann aktuelle Sequenznummer, die über die Drahtlosverbindung übertragenen Paketen zugeordnet ist, von einem rechnerbasierten Speicher in der ersten Vorrichtung an das Wi-Fi-Modul übermittelt wird (312),
wenn die erste Vorrichtung (102) vom zweiten Betriebsmodus (302) in den ersten Betriebsmodus (308) umschaltet, eine dann aktuelle Sequenznummer, die über die Drahtlosverbindung übertragenen Paketen zugeordnet ist, vom Wi-Fi-Modul an das Betriebssystem für den Prozessor übermittelt wird (306).

2. System nach Anspruch 1, wobei der Prozessor (216) keine Paketverarbeitung ausführt, wenn sich die erste Vorrichtung (102) im zweiten Betriebsmodus (302) befindet.

3. System nach Anspruch 1, wobei die Paketverarbeitung das Verwalten von Sequenznummern umfasst, die Paketkommunikationen über die Drahtlosverbindung zugeordnet sind.

4. System nach Anspruch 1, wobei der Prozessor (216) der ersten Vorrichtung (102) Leistung mit einer höheren Rate nutzt, wenn sich die erste Vorrichtung (102) im ersten Betriebsmodus (308) befindet als wenn sich die erste Vorrichtung (102) im zweiten Betriebsmodus (302) befindet.

5. System nach Anspruch 1, wobei der Prozessor (216) in der ersten Vorrichtung (102) das Wi-Fi-Modul (220) nutzt, um auf eine Wi-Fi-Verbindung zuzugreifen, um mit dem Fernverarbeitungssystem (110) mittels der Drahtlosverbindung zu kommunizieren, wenn sich die erste Vorrichtung (102) im ersten Betriebsmodus (308) befindet.

6. System nach Anspruch 1, wobei das Wi-Fi-Modul (220) konfiguriert ist, um die Drahtlosverbindung aufrechtzuerhalten, wenn sich die erste Vorrichtung (102) im zweiten Betriebsmodus (302) befindet, indem es periodisch Aufrechterhaltungspakete über die Drahtlosverbindung an das Fernverarbeitungssystem (110) sendet.

7. System nach Anspruch 6, wobei jedes Aufrechterhaltungspaket eine zugeordnete Sequenznummer umfasst, die auf die Sequenznummer folgt, die an das Wi-Fi-Modul (220) übermittelt wurde, als die erste Vorrichtung (102) in den zweiten Betriebsmodus (302) umgeschaltet hat.

8. System nach Anspruch 1, wobei der rechnerbasierte Speicher ein Direktzugriffsspeicher mit doppelter Datenrate ist.

9. System nach Anspruch 1, wobei das System weiters so konfiguriert ist, dass, nachdem die erste Vorrichtung (102) vom zweiten Betriebsmodus (302) in den ersten Betriebsmodus (308) umgeschaltet hat und die dann aktuelle Sequenznummer vom Wi-Fi-Modul (220) an das Betriebssystem für den Prozessor übermittelt wurde, der Prozessor (216) regelmäßig über die Drahtlosverbindung mit dem Fernverarbeitungssystem (110) kommuniziert, und
wobei jede regelmäßige Kommunikation vom Prozessor (216) zum Fernverarbeitungssystem (110) eine entsprechende Nummer aus einer Sequenz aufweist, die bei der Sequenznummer, die vom Wi-Fi-Modul (220) übermittelt wurde, als die erste Vorrichtung (102) in den ersten Betriebsmodus (308) umgeschaltet hat, beginnt und fortlaufend erhöht wird.

10. System nach Anspruch 1, wobei die erste Vorrichtung (102) konfiguriert ist, um als Antwort auf einen Auslöser vom zweiten Betriebsmodus (302) in den ersten Betriebsmodus (308) umzuschalten, wobei der Auslöser aus folgender Gruppe ausgewählt ist:
ein Signal, das anzeigt, dass eine Bewegung nahe bei der ersten Vorrichtung detektiert wurde,
ein Signal, das anzeigt, dass ein Systembenutzer Zugang zu Daten angefordert hat, die von der ersten Vorrichtung erfasst wurden,
ein Signal, das eine Änderung der Einstellungen für die erste Vorrichtung anzeigt.

11. System nach Anspruch 1, wobei die erste Vorrichtung (102) eine Sicherheitsüberwachungsvorrichtung ist und die Sicherheitsüberwachungsvorrichtung umfasst:
eine Kamera zum Aufnehmen von Bildern oder Videos und
einen Bewegungsmelder zum Detektieren von Bewegung nahe bei der Sicherheitsüberwachungsvorrichtung, und
wobei die Fernverarbeitungsvorrichtung eine Sicherheitsverarbeitungsvorrichtung ist und konfiguriert ist, um Daten zu verarbeiten, die von der Sicherheitsüberwachungsvorrichtung erfasst wurden.

12. System nach Anspruch 11, wobei die Sicherheitsüberwachungsvorrichtung so konfiguriert ist, dass:
wenn sich die Sicherheitsüberwachungsvorrichtung (102) im ersten Betriebsmodus (308) befindet, die Kamera aktiv Bilder oder Videos aufnimmt und der Prozessor (216) die aufgenommenen Bilder oder Videos verarbeitet und/oder die aufgenommenen Bilder oder Videos mittels der Drahtlosverbindung zur weiteren Verarbeitung und/oder für den Zugriff von einer Benutzervorrichtung (108) an das rechnerbasierte Fernverarbeitungssystem überträgt; und
wenn sich die Sicherheitsüberwachungsvorrichtung (102) im zweiten Betriebsmodus (302) befindet, die Kamera nicht aktiv Bilder oder Videos aufnimmt, der Prozessor in einem Zustand mit verringerter Leistung ist, der Bewegungsmelder auf detektierte Bewegung überwacht und das Wi-Fi-Modul die Drahtlosverbindung aufrechterhält.

13. System nach Anspruch 1, weiters umfassend:
eine Benutzervorrichtung (108), die mit dem Drahtlosnetzwerk gekoppelt ist,
wobei die Benutzervorrichtung (108) konfiguriert ist, um es einem Benutzer zu ermöglichen, auf von der ersten Vorrichtung (102) erfasste Daten auf der Benutzervorrichtung (108) zuzugreifen und diese anzuzeigen.

## Revendications

1. Système comprenant :
un premier dispositif (102) comprenant un processeur (216) et un module Wi-Fi (220) ;
un système de traitement à distance (110) couplé au premier dispositif via une connexion sans fil à travers un réseau (106),
dans lequel le premier dispositif (102) est configuré pour commuter, en fonctionnement, entre :
un premier mode de fonctionnement (308) dans lequel le processeur (216) effectue un traitement de paquets pour la connexion sans fil au nom du premier dispositif (102), et
un second mode de fonctionnement (302) dans lequel le processeur (216) est dans un état de puissance réduite et le module Wi-Fi (220) effectue un traitement de paquets pour la connexion sans fil au nom du premier dispositif (102),
**caractérisé en ce que** le système est configuré de telle sorte que :
lorsque le premier dispositif (102) passe du premier mode de fonctionnement (308) au second mode de fonctionnement (302), un numéro de séquence alors en cours associé à des paquets transmis sur la connexion sans fil est transféré (312) d'une mémoire informatique dans le premier dispositif au module Wi-Fi, ou
lorsque le premier dispositif (102) passe du second mode de fonctionnement (302) au premier mode de fonctionnement (308), un numéro de séquence alors en cours associé à des paquets transmis sur la connexion sans fil est transféré (306) du module Wi-Fi à un système d'exploitation pour le processeur.

2. Système selon la revendication 1, dans lequel le processeur (216) n'effectue pas de traitement de paquets lorsque le premier dispositif (102) est dans le second mode de fonctionnement (302).

3. Système selon la revendication 1, dans lequel le traitement de paquets comprend la gestion de numéros de séquence associés à des communications de paquets sur la connexion sans fil.

4. Système selon la revendication 1, dans lequel le processeur (216) du premier dispositif (102) utilise une puissance à un débit supérieur lorsque le premier dispositif (102) est dans le premier mode de fonctionnement (308) que lorsque le premier dispositif (102) est dans le second mode de fonctionnement (302).

5. Système selon la revendication 1, dans lequel le processeur (216) dans le premier dispositif (102) utilise le module Wi-Fi (220) pour accéder à une liaison Wi-Fi à des fins de communication avec le système de traitement à distance (110) via la connexion sans fil lorsque le premier dispositif (102) est dans le premier mode de fonctionnement (308).

6. Système selon la revendication 1, dans lequel le module Wi-Fi (220) est configuré pour maintenir la connexion sans fil lorsque le premier dispositif (102) est dans le second mode de fonctionnement (302) en envoyant périodiquement des paquets de maintien en activité au système de traitement à distance (110) sur la connexion sans fil.

7. Système selon la revendication 6, dans lequel chaque paquet de maintien en activité comprend un numéro de séquence associé continuant à partir du numéro de séquence qui a été transféré au module Wi-Fi (220) lorsque le premier dispositif (102) est passé au second mode de fonctionnement (302).

8. Système selon la revendication 1, dans lequel la mémoire informatique est une mémoire à accès aléatoire à double débit.

9. Système selon la revendication 1, dans lequel le système est en outre configuré de telle sorte que, après que le premier dispositif (102) passe du second mode de fonctionnement (302) au premier mode de fonctionnement (308) et que le numéro de séquence alors actuel est transféré du module Wi-Fi (220) au système d'exploitation pour le processeur, le processeur (216) communique périodiquement avec le système de traitement à distance (110) sur la connexion sans fil, et
dans lequel chaque communication périodique du processeur (216) au système de traitement à distance (110) présente un numéro correspondant à partir d'une séquence qui commence au niveau du numéro de séquence transféré à partir du module Wi-Fi (220) et se poursuit, séquentiellement, à partir de celui-ci lorsque le premier dispositif (102) est passé au premier mode de fonctionnement (308).

10. Système selon la revendication 1, dans lequel le premier dispositif (102) est configuré pour passer du second mode de fonctionnement (3020) au premier mode de fonctionnement (308) en réponse à un déclencheur, et dans lequel le déclencheur est sélectionné dans le groupe consistant en :
un signal indiquant qu'un mouvement a été détecté près du premier dispositif,
un signal indiquant qu'un utilisateur de système a demandé l'accès à des données capturées par le premier dispositif ; et
un signal indiquant un changement de réglage pour le premier dispositif.

11. Système selon la revendication 1, dans lequel le premier dispositif (102) est un dispositif de surveillance de sécurité et le dispositif de surveillance de sécurité comprend :
une caméra pour capturer des images ou une vidéo, et
un détecteur de mouvement pour détecter un mouvement près du dispositif de surveillance de sécurité, et
dans lequel le dispositif de traitement à distance est un dispositif de traitement de sécurité et est configuré pour traiter des données capturées par le dispositif de surveillance de sécurité.

12. Système selon la revendication 11, dans lequel le dispositif de surveillance est configuré de telle sorte que :
lorsque le dispositif de surveillance de sécurité (102) est dans le premier mode de fonctionnement (308), la caméra capture de manière active des images ou une vidéo, et le processeur (216) traite les images ou la vidéo capturées et/ou transmet les images ou la vidéo capturées, via la connexion sans fil, au système de traitement informatique à distance pour un traitement ultérieur et/ou pour un accès à partir d'un dispositif utilisateur (108) ; et
lorsque le dispositif de surveillance de sécurité (102) se trouve dans le second mode de fonctionnement (302), la caméra ne capture pas de manière active des images ou une vidéo, le processeur est dans un état de faible puissance, le détecteur de mouvement surveille le mouvement détecté, et le module Wi-Fi maintient la connexion sans fil.

13. Système selon la revendication 1, comprenant en outre :
un dispositif utilisateur (108) couplé au réseau sans fil,
dans lequel le dispositif d'utilisateur (108) est configuré pour permettre à un utilisateur d'accéder à et de visualiser des données capturées par le premier dispositif (102) au niveau du dispositif d'utilisateur (108).
